# EUROPÄISCHE PATENTSCHRIFT

(11) **EP 1 717 002 B1**
(45) Veröffentlichungstag und Bekanntmachung des Hinweises auf die Patenterteilung: **03.09.2008**
(21) Anmeldenummer: 06006799.8
(22) Anmeldetag: 30.03.2006
(51) Int. Cl.: B29B 7/42, B01F 13/10, C08L 83/04

(54) **Verfahren zur kontinuierlichen Herstellung von hochviskosen vernetzbaren Siliconmassen**
Process for the continuous production of cross linkable highly viscous silicone compositions
Procédé pour la production continue de compositions durcissables à hautes viscosités à base de silicones

(30) Priorität: 28.04.2005 DE 102005019874
(43) Veröffentlichungstag der Anmeldung: 02.11.2006
(73) Patentinhaber: Wacker Chemie AG, 81737 München (DE)
(72) Erfinder: Reitmeier, Rudolf, Dr., 84489 Burghausen (DE); Schuster, Johann, Dr., 84547 Emmerting (DE); Aigner, Stephan, 84489 Burghausen (DE); Schlierf, Alois, 84489 Burghausen (DE)
(74) Vertreter: Fritz, Helmut

(56) Entgegenhaltungen:
- DE-A1- 10 313 941
- DE-A1- 19 617 606

## Beschreibung

Die Erfindung betrifft ein Verfahren zur Herstellung von bei erhöhter Temperatur vulkanisierenden Organopolysiloxanzusammensetzungen in einer Knetkaskade.

Die Einarbeitung von temperaturempfindlichen Additiven wie z. B. Peroxiden oder H-Si-funktionellen Vernetzern sowie Platinkatalysatoren in langkettige Vinyl-funktionelle Organopolysiloxan-Füllstoff-Mischungen (HTV- bzw. HCR-Rubber) wird seit Jahrzehnten auf Walzwerken, meist 2-Walzenstühlen, durchgeführt. Diese gut kühlbaren Walzwerke ermöglichen zwar auch bei hochgefüllten und damit sehr hochviskosen Siliconformulierungen, wie HTV (auch Festkautschuk genannt), selbst mit Niedertemperaturperoxiden qualitativ hervorragende Abmischungen zu produzieren, die beim Endverarbeiter/Kunden zu diversen Elastomeren vulkanisiert werden können. Bei diesem traditionellen Verfahren ist aber ein relativ hoher Zeit- und Personalaufwand notwendig, insb. wenn mehrere niederviskose, z. B. ölige, Zusätze eingearbeitet werden sollen.

Wesentlich wirtschaftlicher (produktiver) ist das Zumischen der für den Endverarbeiter notwendigen Additive in größeren Maschinen, z. B. geschlossenen Knetern. Dabei ist aber aufgrund der bei gefüllten höherviskosen HTV-Kautschuk erheblichen Friktionswärme mit steigender Gesamtmasse eine hohe Kühlleistung notwendig, bzw. die zu mischende Menge und die Reaktivität'der im großen Volumen geeigneten Vernetzer/Beschleuniger ist begrenzt. Außerdem sind bei großen Knetern rel. lange Füllzeiten sowie Entleerzeiten unter Temperaturkontrolle notwendig, was die Produktivität pro Tonne Endprodukt begrenzt.

Deshalb wurde bereits in den 90er Jahren versucht, solche Siliconmischungen kontinuierlich über Schneckenextruder herzustellen, wie bei Thermoplasten und teilweise auch bei organischen Kautschuken. Verwiesen sei hier auf das DIK-Seminar "Kontinuierliches Mischen" 25. - 26.10.1999; insb. auf die Präsentation von H. Schaarschmidt Fa. Berstorff zum Zweischneckenextruder (ZSE): Auch bei gleichdrehenden ZSE, der Standardtechnologie zur Aufbereitung von Thermoplasten, erhöht sich die Produkttemperatur bei hochgefüllten HTV-Kautschuken aufgrund der Friktionswärme relativ stark, sodass die spezifische Leistung (HTV-Mischung/ Zeit x Extruderlänge) insb. bei reaktiven, unter 100°C anspringenden Vernetzungssystemen, trotz intensiver Kühlung sehr begrenzt ist. In EP1110696 A2 ist die Compoundierung von vernetzerfreien, mit verstärkenden Fillern gefüllten, HTV-Basismischungen auch im Zweiwellenextruder beschrieben, bevorzugt bei 140 - 180°C (der sich einstellenden Mischertemperatur). Hier ist ein separater Kühlschritt notwendig vor der Einmischung thermolabiler Additive.
Außerdem sind gut mischende Doppelschneckenextruder insbesondere bei steifen, d. h. mit Kieselsäure hochgefüllten, HTV-Kautschuken problematisch hinsichtlich Metallabrieb, sodass bereits bei mäßigen Drücken unerwünschte "Grauschleier" entstehen können.

In DE 196 17 606 A ist ein "kontinuierliches Verfahren zur Herstellung von lagerstabilen Organopolysiloxanzusammensetzungen" beschrieben, bei dem vorhydrophobierte Kieselsäuren in einer Knetmaschiene mit in Reihe nebeneinander angeordneten Knetkammern in Vinyl-Si-endständiges Polydimethylsiloxan eingemischt wird. Im angeführten Beispiel in der Conterna^{R-}Knetmaschiene wurde mit relativ niederviskosem Polydimethylsiloxan (im Beispiel 20 000 mPa.s) nach 15 Min. schon Temperaturen von 100°C erreicht. Der analoge Vergleichsversuch der Grundmassenherstellung in einem Doppelwellenextruder erbrachte mit denselben Rohstoffen bereits nach 2 Min. Verweilzeit einen Temperaturanstieg auf 150°C.

In DE 103 13 941 A werden höherviskose, nämlich HTV-Siliconmassen, ebenfalls in einer solchen Knetkaskade aus den Rohstoffen Festpolymer und verstärkender Kieselsäure compoundiert. Dabei ergeben sich bereits nach 6 Kammern ohne Heizung oder Kühlung Austrittstemperaturen von 150°C, die beim optimalen Betrieb bis über 200°C steigen. Außerdem werden hier die Füllstoffe über Pulverförderung/Verwiegung sowie die HTV-Polymere bei Temperaturen oberhalb von 100°C und damit wesentlich niederviskoser gegenüber Raumtemperatur, quasi als Flüssigkeit, eindosiert.

Es bestand die Aufgabe, ein kontinuierliches Verfahren bereitzustellen, mit dem vernetzungsfähige, bei erhöhter Temperatur vulkanisierende hochviskose Organopolysiloxanzusammensetzungen auf besonders wirtschaftliche Weise hergestellt werden können.

Gegenstand der Erfindung ist ein Verfahren zur kontinuierlichen Herstellung von bei erhöhter Temperatur vulkanisierenden Organopolysiloxanzusammensetzungen (MH) mit einer bei 25°C gemessenen Viskosität von mindestens 500 Pa.s, bei dem hochviskose Organopolysiloxane (OH) und vernetzende Additive (H) in einer Knetkaskade mit wenigstens zwei in Reihe nebeneinander angeordneten Knetkammern, die jeweils zwei achsparallele gleich- oder gegensinnig antreibbare Knetwerkzeuge enthalten und die durch quer zu den Achsen der Knetwerkzeuge passierbaren Öffnungen miteinander verbunden sind, wobei die erste Knetkammer eine Beschickungsöffnung und die letzte Knetkammer eine Austragsöffnung aufweisen, in einem konstanten Massenverhältnis vermischt und homogenisiert werden, wobei die vernetzerfreien Organopolysiloxane (OH) über einen Fütterextruder mit einer nachgeschalteten Zahnradpumpe zeitlich Konstant eindosiert werden und wobei die Temperatur in den vernetzende Additive (H) enthaltenden Knetkammern höchstens 95°C beträgt.

Bisher ist die Fachwelt davon ausgegangen, dass in einer Knetkaskade die niedrige Temperaturführung und das gute Einmischverhalten von Vernetzern nicht erreichbar sei.

Die niedrige Temperaturführung und das gute Einmischverhalten von vernetzenden Additiven (H) und gegebenenfalls weiteren Zusätzen (Z) in der Knetkaskade ermöglicht eine höhere Wirtschaftlichkeit gegenüber dem oben aufgeführten Stand der Technik: Im erfindungsgemäßen Verfahren sind sowohl bei sehr steifen Organopolysiloxanzusammensetzungen (MH) als auch bei temperaturempfindlichen Additiven hohe Durchsätze fahrbar ohne Anvulkanisation der Vernetzungssysteme, so dass sich eine deutlich bessere Produktivität ergibt gegenüber Walzwerken, Schneckenextrudern oder diskontinuierlichen Mischern.
Es resultieren auch nach längeren Kampagnen stets gut homogenisierte-vernetzungsfähige Organopolysiloxanzusammensetzungen (MH), sodass die spezifischen Qualitätskontrollkosten niedriger sind gegenüber den nach dem Stand der Technik hergestellten MH-Mischungen.

Bei Einsatz gleicher Rohstoffe ist die Lagerstabilität insbesondere bei Bandlieferformen verbessert gegenüber den in Standardmischern oder kühlbaren Knetern hergestellten Organopolysiloxanzusammensetzungen.

Die Temperatur in der Knetkaskade, speziell in den vernetzende Additive (H) enthaltenden Knetkammern, kann beispielsweise durch Knethaken, welche wenig Energie in die Mischung einbringen, durch große Wärmetauschflächen oder durch eine intensive Kühlung mit einem flüssigen Kühlmittel niedrig gehalten werden.

Bei den hochviskosen Organopolysiloxanen (OH) kann es sich um eines oder um eine Mischung unterschiedlicher Organopolysiloxane (OH) handeln. Es können sämtliche, dem Fachmann bei der Herstellung von HTV-, LSR-, RTV-1- und RTV-2-Massen wohl bekannten, hinlänglich beschriebenen Organopolysiloxane (OH) eingesetzt werden. Hierzu zählen lineare, verzweigte, cyclische oder harzartige Organopolysiloxane, die gegebenenfalls, meist zum Zwecke der Vernetzbarkeit funktionelle Gruppen enthalten können. Vorzugsweise werden lineare Organopolysiloxane (OH) eingesetzt, wie Polydimethylsiloxane mit einem Polymerisationsgrad von 50 bis 9.000. Bevorzugte Organoreste der Organopolysiloxane (OH) sind Methyl, Phenyl, Vinyl und Trifluorpropyl, besonders bevorzugt ist der Methyl-Rest. Die in den Polyorganosiloxanen bevorzugt befindlichen funktionellen Gruppen sind -SiOH, -SiOR, Si-Vinyl und -SiH, besonders bevorzugt ist die Vinyl-Gruppe. Besonders bevorzugte Organopolysiloxane (OH) sind die üblicherweise zur Herstellung von hitzehärtenden HTV-Siliconmassen eingesetzten Organopolysiloxane (O) mit einem Brabenderwert von 200 bis 900 daNm bei 25°C gemessen, insbesondere von 400 bis 700 daNm. Die Zusammensetzung der Organopolysiloxane (OH) entspricht vorzugsweise der durchschnittlichen allgemeinen Formel (1)

R¹ₐR²_{b}SiO_{(4-a-b)/2} (1),

in der die Reste
- **R¹**: gleiche oder verschiedene einwertige Si-gebundene Reste darstellen, ausgewählt aus -H, -OH, -OR, wobei R einen C₁₋C₁₀-Kohlenwasserstoffrest bezeichnet sowie gegebenenfalls halogen- oder cyanosubstituierte, gegebenenfalls über eine zweiwertige organische Gruppe an Silicium gebundene, C₁-C₁₀-Kohlenwasserstoffreste, die mindestens eine aliphatische Kohlenstoff-Kohlenstoff Mehrfachbindung enthalten,
- **R²**: gleiche oder verschiedene einwertige Si-gebundene, gegebenenfalls halogen- oder cyanosubstituierte, C₁-C₁₀₋Kohlenwasserstoffreste sind, die keine aliphatischen Kohlenstoff-Kohlenstoff Mehrfachbindungen enthalten,
- **a**: eine nicht negative Zahl von 0 bis 1 ist, und
- **b**: eine nicht negative Zahl von 1 bis 2.1 ist.

**R¹** ist vorzugsweise eine Alkenylgruppe, die einer Reaktion mit einem SiH-funktionellen Vernetzungsmittel oder mit einem Peroxid zugänglich ist. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über'die die Alkenylgruppen an Silicium der Polymerkette gebunden sein können, bestehen beispielsweise aus Oxyalkyleneinheiten, wie solche der allgemeinen Formel (2)

-(O)ₚ[(CH₂)_{q}O]ᵣ- (2),

in der
- **p**: die Werte 0 oder 1, insbesondere 0,
- **q**: Werte von 1 bis 4, insbesondere 1 oder 2 und
- **r**: Werte von 1 bis 20, insbesondere von 1 bis 5 bedeuten.

Die Oxyalkyleneinheiten der allgemeinen Formel (2) sind links an ein Siliciumatom gebunden.

Die Reste **R¹** können in jeder Position der Polymerkette, insbesondere an den endständigen Siliciumatomen, gebunden sein.

**R²** weist vorzugsweise 1 bis 6 Kohlenstoffatome auf. Insbesondere bevorzugt sind Methyl und Phenyl.

Die Struktur der Polyorganosiloxane der allgemeinen Formel (1) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung Vinylgruppen enthaltender Organopolysiloxane (OH), deren Moleküle der allgemeinen Formel (3)

(ViMe₂SiO_{1/2})_{c}(ViMeSiO)_{d}(Me₂SiO)ₑ(Me₃SiO_{1/2})_{f} (3),

entsprechen, wobei **Vi** Vinylrest und **Me** Methylrest bedeuten, die nichtnegativen ganzen Zahlen **c, d, e** und **f** folgende Relationen erfüllen: **c**+**d** ≥ 1, **c**+**f** = 2, 1000<(**d**+**e**)<9000, vorzugsweise 3000<(**d**+**e**)<7000, und 0<(**d**+1)/(**d**+**e**)<1, vorzugsweise 0<(d+l)/(**d**+**e**)<0.1.

Als vernetzende Additive (H) bevorzugt sind Peroxide und Si-H-funktionelle Siloxane mit Platin- oder Rhodiumkatalysatoren.

Als Peroxidvernetzer werden bevorzugt solche aus der Gruppe der Alkyl-, Ketal- bzw. insbesondere der reaktiveren Aroylperoxide eingemischt. Besonders bevorzugt sind hier 2,5-Di-tert.-butylperoxy-2,5-dimethylhexan, Dicumylperoxid, 1,1-Di-(tert.-butylperoxy)-3,3,5-trimethylcyclohexan sowie insbesondere Bis(4-methylbenzoyl)peroxid und Bis(2,4-dichlorbenzoyl)peroxid. Diese werden vorzugsweise als Paste in Siliconöl oder Organopolysiloxan (OH) dosiert.

Als weitere Zusätze (Z) können beispielsweise Beschleuniger, Inhibitoren, Stabilisatoren, Pigmente, Farbpasten, flammhemmende oder wärmeleitfähige Metalloxid-Zusätze, Verbesserer der elektrischen Eigenschaften, beispielsweise Aluminiumtrihydrat, Füllstoffe, Organopolysiloxanmodifier, Strukturverbesserer, Verarbeitungshilfsmittel, Dispergierhilfsmittel, Hydrophobiermittel, beispielsweise Silazane, silanolhaltige Oligosiloxane, Destrukturierungsagenzien, Weichwalzmittel, Haftvermittler, Hitzestabilisatoren und Antioxidantien zugesetzt werden.

Als Inhibitor für Si-H funktionelle Siloxane in Kombination mit Platin- oder Rhodiumkatalysatoren ist Ethinylcyclohexanol bevorzugt.

Farbpasten und Stabilisatoren werden im Verfahren bevorzugt als Pigment- bzw. Metalloxid-Batch oder auch als Ruß-Batch, d. h. als Paste in Siliconöl oder Organopolysiloxan (OH) zudosiert. Besonders bevorzugt werden diese Zusatz (Z)-Siloxan-Batche auf eine Viskosität nicht über 2000 Pa.s eingestellt, weil damit der Aufwand bzw. das Kostenniveau für das Dosierequipment günstiger ist im Vergleich zur beschriebenen Zuspeisung des höherviskosen Organopolysiloxans (OH). Die hiervon einzumischenden Mengen sind vorzugsweise 0,2 bis 10 % bezogen auf die Organopolysiloxanzusammensetzungen (MH).

Als Füllstoffe kommen sämtliche üblicherweise in Siliconmassen eingesetzte Füllstoffe in Frage, wobei auch Mischungen von verschiedenen Füllstoffen eingesetzt werden können. Geeignete Füllstoffe sind beispielsweise Kieselsäuren, Ruße, Metalloxide, -carbonate, -sulfate, -nitride, Diatomeenerde, Tone, Kreiden, Glimmer, Metallpulver, Aktivkohle, Pulver organischer Kunststoffe etc. Wichtig ist, dass die Viskosität der füllstoffhaltigen Organopolysiloxanzusammensetzungen (MH) aufgrund des Füllstoffgehaltes deutlich höher ist als die Viskosität des Organopolysiloxans (OH), welches auf kontinuierliche Weise in diese füllstoffhaltige Siliconmasse eingemischt werden soll. Bevorzugt sind verstärkende Füllstoffe, also Füllstoffe mit einer spezifischen Oberfläche nach BET von mindestens 50 m²/g, vorzugsweise 50-500 m²/g, wie pyrogen erzeugte Kieselsäure, unter Erhalt der Struktur entwässerte Kieselsäurehydrogele, also sog. Aerogele, andere Arten von gefälltem Siliciumdioxid sowie Ruße. Die besonders bevorzugten pyrogen erzeugten Kieselsäuren, gefällten Kieselsäuren und Ruße können gegebenenfalls einer Oberflächenbehandlung unterworfen worden sein, um z. B. deren Dispergierbarkeit zu verbessern.
Vorhydrophobierte oxidische verstärkende Füllstoffe mit einem durch die Hydrophobierung erhaltenen Kohlenstoffgehalt von mindestens 0,5 Gew.-% sind besonders bevorzugt.
Enthalten sein können insbesondere auch die in reiner Form bei Raumtemperatur festen Siliconharze vom Typ der M_{w}DₓT_{y}Q_{z-}Siliconharze.

Der Füllstoffgehalt der Organopolysiloxanzusammensetzungen (MH) liegt vorzugsweise bei 5 bis 80 Gew.-%, insbesondere bei 10 bis 50 Gew.-%. Besonders bevorzugt werden Organopolysiloxanzusammensetzungen (MH) mit einem Füllstoffgehalt von 20 bis 40 Gew.-% hergestellt.

Als Strukturverbesserer sind bevorzugt Organopolysiloxane mit einer bei 25°C gemessenen Viskosität von 10 bis 200 mPa.s, insbesondere 20 bis 150 mPa.s. Bevorzugt sind silanolhaltige Oligosiloxane, trimethylsilyl-endblockierte Dimethyl(oligo- oder poly)siloxane. Vorzugsweise werden die Reste der Strukturverbesserer ausgewählt aus Methyl-, Phenyl-, Vinyl- und Hydroxylgruppen.

Der Anteil an festem Additiv mit niedriger spezifischer Oberfläche kann dabei von unter 1 % bis über 150 % relativ zum Organopolysiloxan (OH) betragen. Bei der zur Verbesserung der elektrischen Eigenschaften gewünschten Einarbeitung von Aluminiumtrihydrat (ATH; BET-Oberfläche 2 - 9 m²/g) sind 10 bis 55 % in der MH-Mischung besonders bevorzugt.

Im Verfahren können die eingesetzten Organopolysiloxane (OH) bereits mit Zusätzen (Z) vermischt sein. Als einzudosierende Grundmischung aus Organopolysiloxanen (OH) und Zusätzen (Z) sind hier prinzipiell alle höherviskosen Vinylgruppenenthaltenden Siliconmassen ohne vernetzende Additive (H) geeignet. Vorzugsweise werden HTV-Polymer-Kieselsäuremischungen mit einem Viskositätsbereich von 1000 bis 100 000 Pa.s, bzw. 10 bis 150 Mooney-Einheiten (Mooney-Endwert, ML(1+4 min) bei 23°C;DIN 53523) eingesetzt, die auch für diverse Anwendungen bei Compoundierern, insb. für Walzwerks- und Extruderabmischungen, vermarktet werden. Diese sind z. B. in DE 103 13 941 A1 beschrieben und von der Wacker-Chemie unter der HTV-Typenreihe Elastosil® R (Rubber) zu beziehen.

Die Knetkaskade besteht vorzugsweise aus mindestens 3 und maximal 10 Knetkammern, besonders bevorzugt sind maximal 6 Kammern. Dabei kann die letzte Kammer vorzugsweise Pumpflügel für den Produktaustrag aufweisen. Die Zudosierung und Einmischung der Einsatzstoffe kann in beliebiger Reihenfolge der Einsatzstoffe geschehen; auch kann die Zudosierung von Einsatzstoffen in eine oder mehrere Kammern(n) der Knetkaskade erfolgen. Vorzugsweise wird alles Organopolysiloxan (OH) in die erste Kammer dosiert. Es ist auch möglich, einen Teil des Organopolysiloxans(OH) in eine spätere Kammer zu dosieren, z. B. um die Vikosität der Organopolysiloxanzusammensetzung (MH) aus den ersten Kammern zu erniedrigen. In alle Kammern können die geplanten vernetzenden Additive (H) und gegebenenfalls erforderlichen Zusätze (Z) dosiert werden, vorzugsweise wird in die letzte Kammer kein Füllstoff dosiert. Dabei ist es möglich, die gesamte erforderliche Füllstoffmenge nur in beispielsweise einer/zwei oder drei der ersten Kammern zuzugeben, eine Verteilung der Additive (H), Füllstoffe und gegebenenfalls erforderlichen Zusätze (Z) anteilig über alle Kammern ist allerdings auch möglich.

Die in den Stabilisator- und Farbpasten wirksamen Oxide können als Pulver dosiert und bevorzugt in den vorderen Kammern des Kaskadenmischers eingemischt werden. Das ist auch bei pulverförmigen und leicht schmelzenden Vernetzern, wie Dicumylperoxid, eine günstigere Verfahrensvariante im Vergleich zum Zusatz (Z)-Siloxan-Batch.

Werden Strukturverbesserer eingesetzt, so werden diese vorzugsweise in die ersten Kammern, insbesondere in der ersten Kammer dosiert. Vorzugsweise wird in die letzte Kammer kein öliger Zusatz (Z) dosiert.

Vorzugsweise weist die Knetkaskade mindestens drei, insbesondere mindestens fünf, Knetkammern auf.
Zwischen einzelnen oder allen Knetkammern können Siebe, Stauscheiben oder Schieber zur Stauung der Organopolysiloxanzusammensetzungen (MH) angebracht sein. Diese Elemente können hinsichtlich ihrer Lage und der von ihnen freigebbaren Durchlassöffnung verstellbar sein. Dadurch lässt sich die Verweilzeit in den einzelnen Kammern beeinflussen. Vorzugsweise sind die Knetwerkzeuge Knethaken, Knetschaufeln, Walzen oder Polygonscheiben.

Vorzugsweise sind in der Knetmaschine neben der Beschickungsöffnung der ersten Knetkammer weitere Beschickungsöffnungen vorhanden, die in die einzelnen Knetkammern führen oder zwischen zwei Knetkammern angeordnet sind. Vorzugsweise weist jede Knetkammer eine Beschickungsöffnung auf. Insbesondere ist die Beschickungsöffnung der ersten und dritten Knetkammer für die Beschickung mit Feststoff geeignet und die anderen Beschickungsöffnungen für die Zudosierung von Flüssigkeiten oder auspressbaren Pasten vorgesehen.
Da in der Knetkaskade kaum freier Gasraum vorhanden ist, kann auf Schutzgas verzichtet werden.

Im erfindungsgemäßen Verfahren verfügt jede Knetkammer der Kaskade vorzugsweise über einen separaten Antrieb, sodass die Steuerung der Intensität des Mischprozesses kammerspezifisch exakt optimiert werden kann.
Vorzugsweise sind die Knetkammern beheizbar und/oder kühlbar, insbesondere einzeln bei unterschiedlicher Temperatur betreibbar.

Dabei sind bevorzugt die ersten Kammern heizbar, z. B. zur Einarbeitung schmelzbarer Feststoffe. Die letzten Knetkammern sind vorzugsweise gut kühlbar zur Einmischung temperatursensibler vernetzender Additive und Zusatzstoffe (Z) und zur Abführung der Friktionswärme.

Die Massetemperaturen in den Knetkammern liegen bei dem erfindungsgemäßen Verfahren vorzugsweise bei Raumtemperatur bis höchstens 150°C, besonders bevorzugt bei 40 bis höchstens 95°C, insbesondere in den letzten Kammern zum Austrag hin. Insbesondere beträgt die Temperatur der vernetzende Additive (H) enthaltenden Knetkammern höchstens 80°C, vorzugsweise höchstens 70°C.

Vorzugsweise sind die Knetwerkzeuge fliegend gelagert. Die lagerseitige Gehäuse-Abschlusswandung ist dann mit Öffnungen für die Antriebswellen der Knetwerkzeuge versehen. Vorzugsweise hat das Gehäuse der Knetkammern eine quer zu den Werkzeugachsen verlaufende Trennstelle, so dass der der Lagerung abgewandte Gehäuseteil in axialer Richtung der Antriebswellen von der Trennstelle und den Knetwerkzeugen wegbewegbar ist. Eine derartig ausgestaltete Knetmaschine ist besonders leicht zu reinigen und damit von Vorteil beim Produktwechsel.
Eine solche Knetmaschine ist in der EP 807509 A beschrieben.

Vorzugsweise wird die homogene Organopolysiloxanzusammensetzung (MH) nach der letzten Knetkammer vorzugsweise über ein flexibles Zwischenstück oder ein Förderband auf eine formgebende Austragsmaschine geführt.

Obwohl die Organopolysiloxanzusammensetzung (MH) bereits nach der Knetkaskade aufgrund der niedrigen Temperatur eine ausgezeichnete Lagerstabilität zeigt, kann diese durch Nachschaltung einer kontinuierlichen, vorzugsweise gekühlten, Walzanlage noch verbessert werden. Bevorzugt wird hier auf eine gut kühlbare Scherwalze ausgetragen, auf der gegebenenfalls auch Zusatzstoffe (Z) eingemischt werden können.

Die gegebenenfalls nachgeschaltete Austragsmaschine ist vorzugsweise ein druckaufbauender Fütterextruder, insbesondere ein Doppelschneckenextruder mit konischen gegenläufigen Zufuhrschnecken und /oder eine Zahnradpumpe.
Mit diesem Vordruck kann im erfindungsgemäßen Verfahren auch ein Strainersieb vor der Austragslochplatte für die gewünschte Lieferform eingebaut werden. Vorzugsweise wird eine selbstschmierende Zahnradpumpe mit einem Siebwechselaufsatz hierfür eingesetzt.

Bei einer weiteren bevorzugten Ausführungsform ist eine Lochplatte mit rotierenden Messern zur kontinuierlichen Herstellung von zylindrischen Pellets der Organopolysiloxanzusammensetzungen (MH) nach der Austragsmaschiene eingebaut. Diese online-Granulierung ist besonders wirtschaftlich, weil dann der nach dem Standardverfahren separat durchgeführte Pelletierschritt ohne Zwischenlagerung der Organopolysiloxanzusammensetzungen (MH) mit dem normalen Personal der kontinuierlichen Anlage durchgeführt werden kann.

Für die zeitlich konstante Eindosierung der vernetzerfreien Organopolysiloxane (OH), gegebenenfalls vermischt mit Zusatzstoffen (Z), insbesondere Füllstoffen, in die Knetkaskade wird ein druckaufbauender Fütterextruder, mit einer nachgeschalteten Zahnradpumpe, eingesetzt. Vorzugsweise werden die Organopolysiloxane (OH), gegebenenfalls vermischt mit Zusatzstoffen (Z), ohne Vorkonditionierung in eine Preform, wie z. B. als Pellets oder Pulver, eingebracht. Vorzugsweise werden hierzu konische Mehrwellenextruder, insbesondere gegenläufige Zweiwellenmaschinen, eingesetzt.

Beim Einsatz von Zweiwellenextrudern kombiniert mit Zahnradpumpen kann ein besonders konstantes Mischungsverhältnis mit den Zusatzstoffen (Z) sichergestellt werden.

Zweiwellenextruder, z. B. unter der Bezeichnung Moriyama bekannte Extruder, sind im Verfahren für alle Silicon-Festkautschuke, unabhängig von deren Form und Viskosität, geeignet und replastifizieren auch sehr thixotrope sowie mit hochdisperser Kieselsäure stark bzw. hoch gefüllte Pasten, selbst bei Verstrammungs-/Entmischungstendenzen.

Die rezepturgenaue Zuspeisung der für die Vulkanisation beim Endverarbeiter notwendigen flüssigen oder pastösen Zusatzstoffe (Z) kann im Verfahren ebenfalls über druckaufbauende Dosiergeräte erfolgen. Hierzu werden je nach Fließfähigkeit der Wirkstoffe einfache Kolben- oder Membranpumpen bzw. Zahnradpumpen oder Schöpfkolbenpumpen mit Rotor/Stator-Förderung vorzugsweise verwendet. Vorzugsweise wird die Dosierleistung der diversen Additivpumpen über ein Prozessleitsystem gekoppelt mit der beschriebenen Einspeisung des Organopolysiloxans (OH), gegebenenfalls vermischt mit Zusatzstoffen (Z), in die 1. Kammer der Knetkaskade. Dadurch wird sowohl das korrekte Dosierverhältnis sichergestellt, als auch eine Durchsatzoptimierung durch die Anlagenfahrer erleichtert.

Bei in größerer Menge einzumischenden Feststoffen, insbesondere flammhemmenden oder wärmeleitfähigen Metalloxid-Zusatzstoffen (Z), werden die insbesondere flammhemmenden oder wärmeleitfähigen Metalloxid-Zusatzstoffe vorzugsweise über eine Differentialwaage dosiert und in einer oder mehreren Knetkammern eingearbeitet.

Obwohl oben nicht explizit ausgeführt, können die im erfindungsgemäßen Verfahren verwendeten Maschinen weitere an sich bekannte Bestandteile enthalten, wie Dosier- und Fördereinrichtungen, Mess- und Regeleinrichtungen, beispielsweise für Druck, Temperatur und Volumenströme, sowie Ventile, übliche zur Heizung oder Kühlung benötigte Teile oder Förder- und Verpackungseinrichtungen.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt.

In den nachstehenden Beispielen wurden eingesetzt:

HTV-Kautschuk A: Hochviskose Festkautschukmischung mit 40 Teilen verstärkender Kieselsäure mit einer BET-Oberfläche von mindestens 200m²/g auf 100 Teilen Polydimethylsiloxan mit einem mittleren Polymerisationsgrad von 5500 und wenigen vernetzungsfähigen Vinylgruppen sowie Verarbeitungshilfsmitteln. Diese HTV-Mischung hat eine Viskosität nach Mooney (ML(1+4 min) bei 23°C; DIN 53523) von ca. 40 und ergibt nach der Vulkanisation, z. B. mit Peroxid, eine Härte nach Shore-A von 60.

HTV-Kautschuk B: Hochgefülltes Kneterzwischenprodukt aus 50 Teilen verstärkender Kieselsäure mit einer BET-Oberfläche von ca. 200m²/g auf 100 Teilen HTV-Vinylfestpolymer (wie bei Kautschuk A) und wenig an kurzkettigen OH-funktionellen Siloxanen, die zusätzlich noch 68 Teile Quarz enthält und eine Mooney-End-Viskosität von ca. 53 hat. Nach Vernetzung ergibt sich eine Shore-A-Härte von ca. 80.

### Beispiel 1 erfindungsgemäßes Verfahren (Pilotanlage)

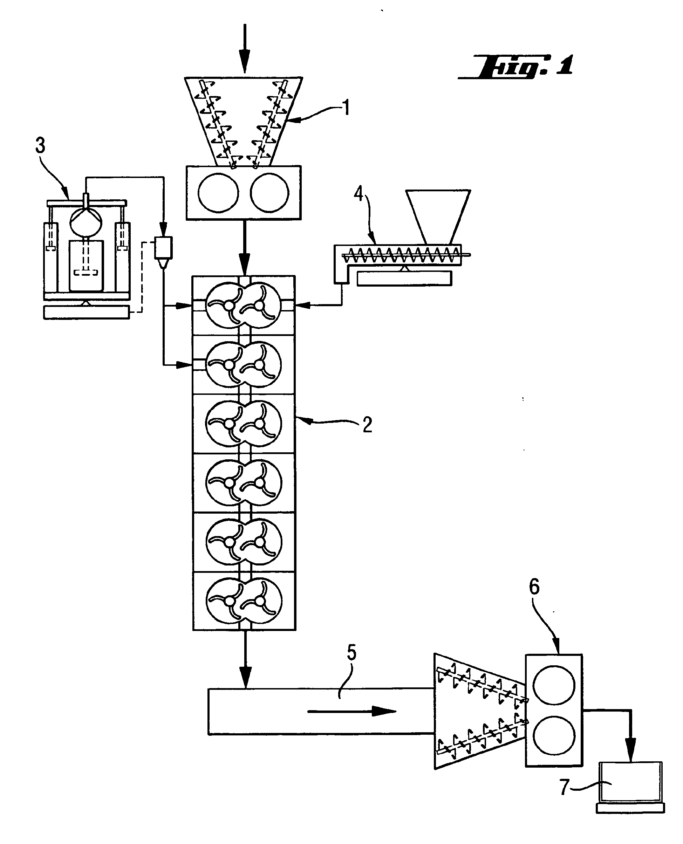

Das Verfahren wird anhand Fig. 1 beschrieben:
Für die Abmischung wurde eine Conterna® -Knetkaskade (2) von IKA Maschinenbau Janke & Kunkel GmbH & Co.KG, Staufen eingesetzt. Die Knetkaskade (2) wies 6 Kammern zu je 5 1 Volumen mit einzeln regelbaren Flügelblöcken auf. Der Gesamtdurchsatz betrug je nach Ölanteil in den Zusätzen 150 bis 250 kg/h.
Für die Zuführung (1) der Mischung aus Organopolysiloxan (OH) mit Füllstoff und den Austrag bzw. die Formgebung (6) der Organopolysiloxanzusammensetzung (MH) wurde jeweils ein konischer Doppelschneckenextruder CTE 75 der Fa. Colmec (Mailand/It.) verwendet.
Die Zusatzstoff-Pasten wurden dazu PLS-gekoppelt über Hobbockauspressgeräte (3) der Fa. ViscoTec (Töging/Germany) mit Exzenterschneckenpumpen und Drucküberwachung dosiert.

In die 1. Kammer der wassergekühlten Knetkaskade (2) wurden über obigen CTE 75 mit einer nachgeschalteten Zahnradpumpe genau
170 kg/h an HTV-Kautschuk A eingepresst. Gleichzeitig dosierte man jeweils über die Entnahmestationen ViscoMT-XS genau 3,06 kg/h von einer 50 %-igen Paste an Di
(4-methylbenzoyl)peroxid in Siliconöl (Fa. Degussa/Peroxid-Chemie) sowie 2,1 kg/h der Farbpaste Elastosil® FL Blau-5015 (Verkaufsprodukt der Wacker-Chemie) in die 1. und 2. Kammer des Knetmischers. Die Drehzahl der gekühlten Schaufeln lag bei 15 bis 50 UpM. Nach ca. 10 Min. Verweilzeit wurde das homogen blau-eingefärbte Kautschukgemisch mit einer Temperatur von 49°C über ein Förderband (5) ausgetragen und in den Schacht eines weiteren gekühlten Förderextruders (6) transportiert. Von dieser druckaufbauenden Schneckenmaschine (6) wurde das MH-Produkt durch eine am Ausgang montierte Lochplatte mit 60x100 mm Kantenlänge geschoben. Nach der Kappung der Kautschukriegel auf 340 mm Länge wurde das fertige Verkaufsprodukt in 20 kg-Kartons (7) abgefüllt bzw. ging zur Qualitätskontrollprüfung.
Bei der Vulkanisation bei 135°C/10 Min. erhielt man eine glatte Prüfplatte mit der Härte von 61 nach ShoreA. Die Schnellprüfung verschiedener Zwischenproben aus einem 2 Tonnen-Ansatz am Vulkameter zeigte identische T90-Werte und damit eine ausgezeichnete Homogenität des Verkaufsproduktes.

In Fig. 1 ist auch die Möglichkeit einer Feststoffdosierung mit Wägeeinrichtung (4) abgebildet.

### Beispiel 2: erfindungsgemäßes Verfahren, Pilotanlage

Es wurden 220 kg/h an HTV-Kautschuk B, statt des HTV-Kautschuks A von Beispiel 1, über den Dosierextruder (1) der Knetkaskade (2) zugeführt, aber über die Hobbockentnahmestation (3) jetzt 1,2 % einer 45 %igen Paste an 2,5-Di-tert.-butyl-peroxy-2,5-dimethylhexan in Siliconkautschuk (käuflich als DHBP-45-PSI von Peroxid-Chemie). Zur Einfärbung wurden hier 8,8 kg/h an Farbgranulat Elastosil® FG Schwarz-9005 über ein Flexwall-Dosiergerät (Fa. Brabender) direkt in den Einlauftrichter der 2. Knetkammer zugegeben, die ebenfalls am Ausgang der letzten Kammer homogen eingemischt waren.
Zusätzlich zum Beispiel 1 war eine gekühlte Zahnradpumpe GP112 mit Siebwechselaufsatz (Fa. Colmec/Mailand) am Ausgang des konischen Fütterextruders (6) vor der Lieferformgebung montiert, sodass hier auch ein 100µm-Strainer eingebaut werden konnte.
Über eine 10x40 mm Lochplatte wurde bei Temperaturen unter 60°C ein sog. L8-Endlosband hergestellt, das nach den Ergebnissen der Qualitätsprüfung (Verpressung bei 165°C/10 Min.; mehrere Proben der Ansatzcharge zum Vulkametertest: T90-Werte innerhalb der Messunsicherheit gleich) homogen gemischt war.
Diese hochgefüllte HTV-Mischung weist eine hohe Ölbeständigkeit auf.

### Vergleichsbeispiel 1: nicht erfindungsgemäßes Verfahren

Bei der Abmischung derselben Komponenten der unter Beispiel 2 beschriebenen vernetzungsaktiven Sicherheitkabelmischung in einem gut gekühlten 1 to-Mischer, z. B. einem wassergekühlten Sigmakneter, sind mindestens 4 Stunden Misch- und Entleerzeit notwendig, weil die Innentemperatur unterhalb von 100°C bleiben muss, um Anvulkanisation zu vermeiden.
Mit der Befüllzeit des 1 to-Mischers von mind. 1 h bei 1 Anlagenfahrer und der Arbeitszeit für den nachfolgend 100µm-Strainer-Vorgang (mind. ca. 2 - 3 h für 1 to) ergibt sich hier nur eine Gesamtproduktivität von nur 130 - 140 kg/h bis zur Abfüllung.

Beim erfindungsgemäßen Verfahren errechnet sich im Vergleich dazu bereits bei der relativ kleinen Pilotanlage nach Beispiel 2 eine Produktivität pro 1 Bedienperson inkl. online-Strainerung von über 220 kg/h.

### Vergleichsbeispiel 2: nicht erfindungsgemäßes Verfahren

Beim traditionellen Verfahren zur Einmischung sehr reaktiver Vernetzer werden 120 kg HTV-Kautschuk A auf einem großen Standardwalzwerk von zwei wassergekühlten Stahlwalzen (je 550 mm Durchmesser; 2 m Länge) wie in Beispiel 1 mit 1,8 % an Di(4-methylbenzoyl)peroxid (= 2,16 kg Paste, 50 %ig in Siliconöl) und 1,2 % Flüssigfarbpaste FL Blau-5015 abgemischt. Aufgrund der öligen Konsistenz der Zusätze müssen diese portionsweise auf das Walzenfell gegeben werden, damit keine Kautschukablösungen von den mit unterschiedlicher Drehzahl rotierenden Walzen und Verluste eintreten. Nach mindestens 20 Min. Zugabezeit beginnt die eigentliche Homogenisierzeit von weiteren 15 Min. und dann erst die Abnahme zum nachgeschalteten Strainer-Extruder. Der 100µm-Reinigungsschritt und die Verpackung der abgeschnittenen Lieferform analog Beispiel 1 dauert weitere 25 - 30 Min., damit eine örtlichen Erwärmungen über die kritische Kautschuktemperatur dieses Vernetzungsystems von 65°C , d. h. Anvulkanisation des vernetzungsaktiven MH-Produktes, vermieden werden können.
Die durchschnittliche Produktivität des Standardwalzwerkes liegt daher unter 125 kg/h mit solchen abschmierenden Additiven. Bei einer höheren Mischungsmenge pro Zeit riskiert man Inhomogenitäten im Verkaufsprodukt und damit Verarbeitungsprobleme in der Extrusionsanwendung, d. h. beim Kunden. Diese können auch in der Qualitätskontrolle, insbesondere beim spezifischen Vergleich der Vulkameterwerte verschiedener Walzenmischungen (Vernetzungsgeschwindigkeit als Schnelltest), einer Charge erkannt werden.

Das erfindungsgemäße kontinuierliche Mischverfahren, belegt in Beispiel 1, führt dagegen auch bei Niedertemperaturvernetzern zu einer höheren Qualität bezüglich schwieriger Additive und insb. zu einer deutlich höherer Produktivität des Prozesses.

## Patentansprüche

1. Verfahren zur kontinuierlichen Herstellung von bei erhöhter Temperatur vulkanisierenden Organopolysiloxanzusammensetzungen (MH) mit einer bei 25°C gemessenen Viskosität von mindestens 500 Pa.s, bei dem hochviskose Organopolysiloxane (OH) und vernetzende Additive (H) in einer Knetkaskade mit wenigstens zwei in Reihe nebeneinander angeordneten Knetkammern, die jeweils zwei achsparallele gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, in einem konstanten Massenverhältnis vermischt und homogenisiert werden, wobei die vernetzerfreien Organopolysiloxane (OH) über einen Fütterextruder mit einer nachgeschalteten Zahnradpumpe zeitlich konstant eindosiert werden und wobei die Temperatur in den vernetzende Additive (H) enthaltenden Knetkammern höchstens 95°C beträgt.

2. Verfahren nach Anspruch 1, bei dem die Organopolysiloxane (OH) und die vernetzenden Additive (H) und weitere Zusätze (Z) in einem konstanten Massenverhältnis vermischt und homogenisiert werden.

3. Verfahren nach Anspruch 2, bei dem die Zusätze (Z) ausgewählt werden aus Beschleunigern, Inhibitoren, Stabilisatoren, Pigmenten, Farbpasten, flammhemmenden oder wärmeleitfähigen Metalloxid-Zusätzen, Verbesserern der elektrischen Eigenschaften, Füllstoffen, Organopolysiloxanmodifiern, Strukturverbesserern, Verarbeitungshilfsmitteln, Dispergierhilfsmitteln, Hydrophobiermitteln, Destrukturierungsagenzien, Weichwalzmitteln, Haftvermittlern, Hitzestabilisatoren und Antioxidantien.

4. Verfahren nach Anspruch 1 bis 3, bei dem die Knetkaskade aus 3 bis 10 Knetkammern besteht.

5. Verfahren nach Anspruch 1 bis 4, bei dem der Füllstoffgehalt der Organopolysiloxanzusammensetzungen (MH) bei 5 bis 80 Gew.-% liegt.

6. Verfahren nach Anspruch 1 bis 5, bei dem als Organopolysiloxane (OH) Polydimethylsiloxane eingesetzt werden, deren Moleküle der allgemeinen Formel (3)
(ViMe₂SiO_{1/2})_{c}(ViMeSiO)_{d}(Me₂SiO)ₑ(Me₃SiO_{1/2})_{f} (3),
entsprechen, wobei **Vi** Vinylrest und **Me** Methylrest bedeuten, die nichtnegativen ganzen Zahlen **c, d, e** und **f** folgende Relationen erfüllen: **c+d** ≥ 1, **c+f** = 2, 1000<**(d+e)**<9000, vorzugsweise 3000<**(d+e)**<7000, und 0<(**d**+1)/**(d+e)**<1, vorzugsweise 0<(**d**+1)/(**d+e**)<0.1.

7. Verfahren nach Anspruch 1 bis 6, bei dem als vernetzende Additive (H) Peroxidvernetzer eingemischt werden, die ausgewählt werden aus Alkyl-, Ketal- und Aroylperoxiden.

8. Verfahren nach Anspruch 1 bis 6, bei dem als vernetzende Additive (H) H-Si-funktionelle Siloxane sowie Platin- oder Rhodiumkatalysatoren und Inhibitoren eingemischt werden.

9. Verfahren nach Anspruch 1 bis 8, bei dem die Organopolysiloxanzusammensetzung (MH) nach der letzten Knetkammer auf eine formgebende Austragsmaschine geführt wird.

## Claims

1. Process for the continuous production of organopolysiloxane compositions (MH) which vulcanize at elevated temperature and have a viscosity measured at 25°C of at least 500 Pa.s, in which high-viscosity organopolysiloxanes (OH) and crosslinking additives (H) are mixed and homogenized in a constant mass ratio in a kneading cascade having at least two kneading chambers which are arranged in series next to one another and each contain two axially parallel kneading tools which can be driven in the same or opposite directions and which are connected to one another by means of openings transverse to the axes of the kneading tools, with the first kneading chamber having a feed opening and the last kneading chamber having a discharge opening the crosslinker-free organopolysiloxanes (OH) being introduced constantly (over time) via a feed extruder with a gear pump installed downstream and the temperature in the kneading chambers containing crosslinking additives (H) being not more than 95°C.

2. Process according to Claim 1, in which the organopolysiloxanes (OH) and the crosslinking additives (H) and further additives (A) are mixed and homogenized in a constant mass ratio.

3. Process according to Claim 2, in which the additives (A) are selected from among accelerators, inhibitors, stabilizers, pigments, color pastes, flame-retardant or thermally conductive metal oxide additives, substances which improve the electrical properties, fillers, organopolysiloxane modifiers, structure improvers, processing aids, dispersants, hydrophobicizing agents, destructuring agents, plasticizers, bonding agents, heat stabilizers and antioxidants.

4. Process according to Claims 1 to 3, in which the kneading cascade comprises from 3 to 10 kneading chambers.

5. Process according to Claims 1 to 4, in which the filler content of the organopolysiloxane compositions (MH) is from 5 to 80% by weight.

6. Process according to Claims 1 to 5, in which polydimethylsiloxanes whose molecules correspond to the general formula (3)
(ViMe₂SiO_{1/2})_{c}(ViMeSiO)_{d}(Me₂SiO)ₑ(Me₃SiO_{1/2})_{f} (3),
where **Vi** is a vinyl radical and **Me** is a methyl radical, the nonnegative integers **c, d, e** and **f** satisfy the following relationships: **c**+**d** ≥ 1, **c**+**f** = 2, 1000<**(d+e)**<9000, preferably 3000<**(d+e)**<7000, and 0<(**d**+1)/**(d+e)**<1, preferably 0<(**d**+1)/(**d+e**)<0.1, are used as organopolysiloxanes (OH).

7. Process according to Claims 1 to 6, in which peroxide crosslinkers selected from among alkyl peroxides, ketal peroxides and aroyl peroxides are mixed in as crosslinking additives (H).

8. Process according to Claims 1 to 6, in which H-Si-functional siloxanes and also platinum or rhodium catalysts and inhibitors are mixed in as crosslinking additives (H).

9. Process according to Claims 1 to 8, in which the organopolysiloxane composition (MH) is fed onto a shaping discharge machine after the last kneading chamber.

## Revendications

1. Procédé en vue de la fabrication en continu de compositions d'organopolysiloxanes capables de vulcanisation à température plus élevée (MH), ayant une viscosité mesurée à la température de 25 °C d'au moins 500 Pa.s, dans lequel l'on procède au mélange et à l'homogénéisation, dans un rapport massique constant, des organopolysiloxanes fortement visqueux (OH) et des additifs de réticulation (H) dans une cascade de pétrissage ayant au moins deux chambres de pétrissage disposées en série l'une à côté de l'autre, qui contiennent à chaque fois deux outils de pétrissage à axes parallèles capables d'entraînement dans le même sens ou dans des sens opposés et qui sont reliées entre elles par des ouvertures pouvant être pratiquées perpendiculairement aux axes des outils de pétrissage, la première chambre de pétrissage présentant une ouverture de chargement et la dernière chambre de pétrissage une ouverture d'évacuation, les organopolysiloxanes exempts d'agents de réticulation (OH) étant introduits par dosage par l'intermédiaire d'une extrudeuse d'alimentation d'une manière constante dans le temps à l'aide d'une pompe à engrenages intercalée à la suite et la température dans les chambres de pétrissage contenant les additifs de réticulation (H) étant au plus de 95 °C.

2. Procédé selon la revendication 1, dans lequel l'on procède au mélange et à l'homogénéisation, dans un rapport massique constant, des organopolysiloxanes (OH) et des additifs de réticulation (H) et d'autres adjuvants (Z).

3. Procédé selon la revendication 2, dans lequel les adjuvants (Z) sont sélectionnés parmi les agents d'accélération, les agents inhibiteurs, les agents stabilisateurs, les pigments, les pâtes colorantes, les adjuvants d'oxydes métalliques ignifuges ou thermoconducteurs, les agents d'amélioration des propriétés électriques, les charges, les agents de modification d'organopolysiloxanes, les agents d'amélioration de la structure, les adjuvants de mise en oeuvre, les adjuvants de mise en dispersion, les agents hydrophobes, les agents de déstructuration, les agents de laminage doux, les agents promoteurs de l'adhésion, les agents de stabilisation thermique et les agents anti-oxydants.

4. Procédé selon les revendications 1 à 3, dans lequel la cascade de pétrissage se compose de 3 à 10 chambres de pétrissage.

5. Procédé selon les revendications 1 à 4, dans lequel la teneur en charge des compositions d'organopolysiloxanes (MH) se situe entre 5 à 80 % en poids.

6. Procédé selon la revendication 1 à 5, dans lequel l'on utilise, en tant qu'organopolysiloxanes (OH), des polydiméthylsiloxanes, dont les molécules de la formule générale (3) correspondent à
(ViMe₂SiO_{1/2})_{c}(ViMeSiO)_{d}(Me₂SiO)ₑ(Me₃SiO_{1/2})_{f} (3)
vi et Me représentant un radical vinyle, respectivement un radical méthyle, les nombres entiers non négatifs c, d, e et f remplissant les relations suivantes: c+d ≥ 1, c+f = 2, 1000 < (d+e) < 9000, de préférence 3000 < (d+e) < 7000, et 0 < (d+1)/(d+e) < 1, de préférence 0 < (d+1)/(d+e) < 0.1.

7. Procédé selon la revendication 1 à 6, dans le cas duquel l'on utilise, en tant qu'additifs de réticulation (H), des agents de réticulation à peroxydes, qui sont sélectionnés parmi les peroxydes alkyles, les peroxydes de cétals et les peroxydes aroyles.

8. Procédé selon les revendications 1 à 6, dans lequel l'on introduit par mélange, en tant qu'additifs de réticulation (H), des siloxanes fonctionnels H-Si ainsi que des catalyseurs au platine ou au rhodium et des agents d'inhibition.

9. Procédé selon les revendications 1 à 8, dans lequel la composition d'organopolysiloxanes (MH) est conduite, après la dernière chambre de pétrissage, à une machine d'application conférant une forme.
